# EUROPÄISCHE PATENTANMELDUNG

(11) **EP 3 817 315 A1**
(43) Veröffentlichungstag der Anmeldung: **05.05.2021**
(21) Anmeldenummer: 19205854.3
(22) Anmeldetag: 29.10.2019
(51) Int. Cl.: H04L 29/06

(54) **PRÜFVORRICHTUNG, VORRICHTUNG UND VERFAHREN ZUM VALIDIEREN VON TRANSAKTIONEN**

(71) Anmelder: Siemens Aktiengesellschaft, 80333 München (DE)
(72) Erfinder: Falk, Rainer, 85586 Poing (DE)

(57) **Zusammenfassung**

Durch die Erfindung wird ein "Multi-level Security"-Security-Modell für eine Netzwerkapplikation (z. B. eine Blockchain-Infrastruktur) realisiert. Dies ermöglicht die Nutzung einer gemeinsamen Blockchain-Infrastruktur für Applikationen mit unterschiedlicher Kritikalität. Dabei ist mit hoher Verlässlichkeit gewährleistet, dass unterschiedlich kritische Applikationen voneinander isoliert sind. Dies ist z.B. vorteilhaft, wenn Safety-kritische oder Betriebs-kritische Steuerungs- oder Überwachungsfunktionen eines Cyber-physikalischen Systems unter Nutzung der Blockchain-Technologie (Distributed Ledger) realisiert sind.

## Beschreibung

Die Aufgabe der Erfindung ist es, eine Alternative zum Stand der Technik zu bilden.

Nachfolgend werden Aspekte der Erfindung erläutert.

Gemäß einem ersten Aspekt betrifft die Erfindung eine Prüfvorrichtung für an eine Netzwerkapplikation gesendete unvalidierte Transaktion aufweisend:
- eine Kommunikationsschnittstelle, wobei
   ∘ die Kommunikationsschnittstelle dazu eingerichtet ist, eine unvalidierte Transaktion von einem Sender zu empfangen,
   ∘ der unvalidierten Transaktion mittels eines ersten Identifikationsdatensatzes einer Sendergruppe und/oder dem Sender zugeordnet ist;
- ein Prüfmodul, wobei
   ∘ das Prüfmodul dazu eingerichtet ist, ein Prüfergebnis für die unvalidierte Transaktion anhand des ersten Identifikationsdatensatzes und eines Sicherheitszustandes des Senders und/oder einer Sendergruppe zu ermitteln;
- ein Validierungsmodul, wobei
   ∘ das Validierungsmodul dazu eingerichtet ist, die unvalidierte Transaktion anhand des Prüfergebnisses als validierte Transaktion in einer Netzwerkapplikation zu speichern.

Beispielsweise kann der Datensatz Steuerbefehle umfassen, um beispielsweise eine Steuertransaktion zu realisieren, die in einer Netzwerkapplikation gespeichert wird und/oder von einer Komponente der Infrastruktur der Netzwerkkomponente ausgeführt wird.

Die Prüfvorrichtung kann beispielsweise mittels einer Komponente (z. B. einem Knoten oder Gerät) einer Netzwerk-Applikation (oder auch als Netzwerkapplikation bezeichnet) und/oder einem verteilten Datenbanksystem und/oder einer Blockkette oder einer Kombination der genannten Möglichkeiten realisiert sein. Die Prüfvorrichtung kann beispielsweise auch eine Netzwerk-Applikation oder ein verteiltes Datenbanksystem oder eine Blockkette sein oder als solche realisiert sein. Beispielsweise können Komponenten (z. B. ein Knoten) der Infrastruktur der Netzwerkapplikation (z. B. eine Blockkette) die Prüfvorrichtung umfassen.

Die Technologie von Blockketten (engl. Blockchains) bzw. "Distributed Ledgers" ist aktuell eine intensiv diskutierte Technologie, die insbesondere als verteiltes Datenbanksystem oder als Netzwerk-Applikation realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, IoT-Geräte Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) oder eine Tensorverarbeitungseinheit TPU (Tensor Processing Unit) oder einen Netzwerkprozessor NPU (Network Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte, eine Speicherkarte, ein Flash-Speichermodul, ein Batterie-gepuffertes SRAM-Speichermodul oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen des entsprechenden Moduls ausführt oder um das erfindungsgemäße Verfahren oder einen Schritt des erfindungsgemäßen Verfahrens zu implementieren oder zu realisieren. Es kann beispielsweise ein Prozessor derart ausgebildet sein, dass dieser die Funktionen von mehreren Modulen realisiert.

Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID) ein zweites Datum zugeordnet, in dem z. B. das erste Datum zusammen mit der Speicheradresse oder des eindeutigen Identifizierers des zweiten Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) oder der Netzwerk-Applikation verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems (oder der Netzwerk-Applikation) oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft. Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems (oder der Netzwerk-Applikation) prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks, für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems (oder der Netzwerk-Applikation) den vorhergehenden Datenblock des verteilten Datenbanksystems (oder der Netzwerk-Applikation) angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems oder der Netzwerk-Applikation) verwendet werden, um einen neuen Datenblock mit einem (vorhandenen) Datenblock des verteilten Datenbanksystems (oder der Netzwerk-Applikation) zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems (oder der Netzwerk-Applikation) umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen beziehen. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann (um z. B. im ungeschützten Teil noch personenbezogene Daten zu speichern). Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems (oder der Netzwerk-Applikation) sein, eine Transaktionsprüfsumme eines Datenblocks mit den entsprechenden Daten (des verteilten Datenbanksystems oder der Netzwerk-Applikation oder einer anderen Datenbank) oder eine Datenprüfsumme, die über die Daten gebildet wurde.

Zusätzlich kann die entsprechende Transaktion noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank oder einer anderen Netzwerk-Applikation, welche die Daten umfasst) umfassen. Die entsprechenden Daten könnten dann beispielsweise auch in einer weiteren Transaktion eines weiteren Datenblocks des verteilten Datenbanksystems oder der Netzwerk-Applikation bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in den entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems oder der Netzwerk-Applikation möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems (oder der Netzwerk-Applikation) für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems oder einer Netzwerk-Applikation" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems (oder der Netzwerk-Applikation) verweisen bzw. diese referenzieren [1] [4] [5] .

Unter "Einfügen in das verteilte Datenbanksystem oder die Netzwerk-Applikation" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems oder einer Netzwerk-Applikation übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems oder der Netzwerk-Applikation verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, ein Blockketten-Orakel oder eine Blockketten-Plattform) erfolgen. Insbesondere kann dabei unter einer Blockketten-Plattform eine Blockkette als Dienst (engl. Blockchain as a Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems (oder der Netzwerk-Applikation) verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transkationen umfasst. Beispielsweise kann auch eine entsprechende Transaktion einen Smart-Contract umfassen. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktionen und/oder eine Bestätigungstransaktion mit einer Bestätigungsnachricht und/oder eine Ausführungsbestätigungstransaktion mit einer Ausführungsbestätigungsnachricht verstanden werden. Eine Ausführungsbestätigungsnachricht kann beispielsweise eine Bestätigung für eine Ausführung der Steuerbefehle der Steuertransaktion durch eines der Geräte umfassen, wenn ein entsprechendes Gerät der Geräte die Steuerbefehle der Steuertransaktion erfolgreich ausgeführt hat. Hierzu kann die Ausführungsbestätigungsnachricht beispielsweise eine von dem entsprechenden Gerät erzeugte Prüfsumme (z. B. eine Transaktionsprüfsumme) über die ausgeführten Steuerbefehle umfassen und/oder eine Bestätigung der Ausführung umfassen, die z. B. von der Prüfsumme ebenfalls geschützt ist. Eine Ausführungsbestätigungsnachricht kann beispielsweise auch in dem verteilten Datenbanksystem oder der Netzwerk-applikation gespeichert werden, wenn das Gerät die Steuerbefehle teilweise ausführt und/oder die Ausführung der Steuerbefehle unterbrochen wird. Dies kann z. B. der Fall sein, wenn während der Ausführung der Steuerbefehle ein Defekt an dem Gerät aufgetreten ist, der die Ausführung der Steuerbefehle nicht mehr erlaubt (z. B. trat ein Defekt an einem Aktor oder Werkzeug auf). Beispielsweise kann ein anderes Gerät, das beispielsweise die Ausführungsanforderungen für die verbleibenden unausgeführten Steuerbefehle erfüllt, dann anhand der Ausführungsbestätigungsnachricht diese unausgeführten Steuerbefehle der entsprechenden Steuertransaktion ausführen. Entsprechend kann die Ausführungsbestätigungsnachricht beispielsweise den Grad der Ausführung bzw. eine Angabe über den ausgeführten Teil der Steuerbefehle umfassen. Alternativ oder zusätzlich kann eine Ausführungsbestätigungsnachricht die Steuerbefehle angeben, die für eine erfolgreiche Ausführung der Steuerbefehle einer entsprechenden Steuertransaktion noch ausgeführt werden müssen. Entsprechend kann beispielsweise eine Ausführungsbestätigungsnachricht einen Datensatz umfassen, der angibt welche der Steuerbefehle noch auszuführen sind bzw. der angibt welche der Steuerbefehle für die erfolgreiche Ausführung der Steuerbefehle einer entsprechenden Steuertransaktion fehlen. Hierdurch wird beispielsweise ermöglicht, dass eine Weiterverarbeitung der Steuerbefehle erfolgen kann, selbst wenn die Ausführung der Steuerbefehle bei einem Gerät unterbrochen wurde. Entsprechend kann beispielsweise in den Ausführungsanforderungen gefordert sein, dass mehr als ein Gerät (z. B. zwei oder drei Geräte oder mehr Geräte) die Ausführungsanforderungen erfüllt, damit eine Ausführung der Steuerbefehle auch garantiert ist, selbst wenn z. B. ein Gerät während der Ausführung der Steuerbefehle einer entsprechenden Steuertransaktion ausfällt.

Alternativ kann eine Transaktion beispielsweise eine Datenstruktur sein, die Daten speichert (z. B. die Steuerbefehle). Eine Transaktion kann beispielsweise auch als Nachricht (also eine Kommunikationsnachricht, welche Daten speichert) bezeichnet werden bzw. eine Nachricht sein, die z. B. entsprechende Daten (z. B. Steuerbefehle) speichert. Mit der Erfindung können somit entsprechende Transaktionen oder Nachrichten ausgetauscht werden. Transaktionen können dabei z. B. die Steuerbefehle und/oder Vertragsdaten und/oder andere Daten wie Videodaten, Nutzerdaten, Messdaten etc. umfassen.

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems oder der Netzwerk-Applikation) oder die entsprechende Transaktion des verteilten Datenbanksystems oder der Netzwerk-Applikation) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem oder die Netzwerk-Applikation" erläutert ist.

Unter einem "Programmcode" (z. B. ein Smart-Contract oder Chain-Code) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem oder die Netzwerk-Applikation ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems oder der Netzwerk-Applikation ausgeführt [4][5]. Dabei wird beispielsweise eine virtuelle Maschine durch die Infrastruktur des verteilten Datenbanksystems (oder der Netzwerk-Applikation) realisiert.

Unter einem "Smart Contract" kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems oder der Netzwerk-Applikation (z. B. eine Blockkette) gespeichert, beispielsweise in einem Datenblock des verteilten Datenbanksystems (oder der Netzwerk-Applikation). Beispielsweise kann der Smart Contract auf die gleiche Weise ausgeführt werden, wie dies bei der Definition von "Programmcode", insbesondere im Zusammenhang mit der Erfindung, erläutert ist.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem oder durch die Netzwerk-Applikation verstanden werden, wobei beispielsweise die entsprechende Infrastruktur des verteilten Datenbanksystems oder der Netzwerk-Applikation den Programmcode ausführt.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt oder Inhalt einer bestimmten Transaktion zu lösen ist [1][4][5]. Eine solche rechenintensive Aufgabe wird beispielsweise auch als kryptographisches Puzzle bezeichnet.

Unter einer "Netzwerk-Applikation", kann im Zusammenhang mit der Erfindung beispielsweise eine dezentral verteilte Datenbank, ein verteiltes Datenbanksystem, eine verteilte Datenbank, eine Peer-to-Peer Applikation, ein verteiltes Speicherverwaltungssystem, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Beispielsweise kann eine Netzwerk-Applikation (oder auch als Netzwerkapplikation bezeichnet) ein verteiltes Datenbanksystem sein, das z. B. mittels einer Blockkette oder einem distributed ledger realisiert ist. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder einer Kombination aus den genannten Implementierungsvarianten [6][7] umgesetzt ist. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" oder einer "Netzwerk-Applikation" kann beispielsweise auch ein verteiltes Datenbanksystem oder eine Netzwerk-Applikation verstanden werden, von dem/der zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen über gerichtete Kanten miteinander verbunden. Azyklisch bedeutet dabei insbesondere, dass es keine gerichteten Schleifen im Graphen gibt.

Bei dem verteilten Datenbanksystem oder bei der Netzwerk-Applikation kann es sich beispielsweise um ein öffentliches verteiltes Datenbanksystem oder eine ein öffentliche Netzwerk-Applikation (z. B. eine öffentliche Blockkette) oder ein geschlossenes (oder privates) verteiltes Datenbanksystem oder eine geschlossene Netzwerk-Applikation (z. B. eine private Blockkette) handeln.

Handelt es sich beispielsweise um ein öffentliches verteiltes Datenbanksystem oder eine öffentliche Netzwerk-Applikation, bedeutet dies, dass neue Knoten und/oder Geräte ohne Berechtigungsnachweise oder ohne Authentifizierung oder ohne Anmeldeinformationen oder ohne Credentials dem verteilten Datenbanksystem oder der Netzwerk-Applikation beitreten können bzw. von diesem akzeptiert werden. Insbesondere können in einem solchen Fall die Betreiber der Knoten und/oder Geräte anonym bleiben.

Handelt es sich bei dem verteilten Datenbanksystem oder der Netzwerk-Applikation beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem oder der Netzwerk-Applikation beitreten zu können bzw. von diesem akzeptiert zu werden.

Bei einem verteilten Datenbanksystem oder bei der Netzwerk-Applikation kann es sich beispielsweise auch um ein verteiltes Kommunikationssystem zum Datenaustausch handeln. Dies kann beispielsweise ein Netzwerk oder ein Peer-to-Peer Netzwerk sein.

Bei einem/dem verteilten Datenbanksystem kann es sich beispielsweise auch um ein dezentrales verteiltes Datenbanksystem und/oder ein dezentrales verteiltes Kommunikationssystem handeln.

Bei einer "Netzwerk-Applikation" kann es sich beispielsweise auch um eine Netzwerk-Applikationsinfrastruktur handeln oder die Netzwerk-Applikation umfasst eine entsprechende Netzwerk-Applikationsinfrastruktur. Diese Infrastruktur kann beispielsweise Knoten und/oder Kommunikationsnetze und/oder Datenschnittstelle und/oder weitere Komponenten umfassen, um die Netzwerk-Applikation zu realisieren oder auszuführen. Bei der Netzwerk-Applikation kann es sich z. B. um eine verteilte Netzwerk-Applikation (z. B. eine verteilte Peer-to-Peer Applikation oder ein verteiltes Datenbanksystem) handeln, die beispielsweise auf mehreren Knoten der Netzwerk-Applikationsinfrastruktur ausgeführt wird.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems oder einer Netzwerk-Applikation (z. B. eine Blockkette oder eine Peer-to-Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Blockheader), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem oder der Netzwerk-Applikation gespeichert sind. Damit lassen sich beispielsweise blocklose (engl. blockless) verteilte Datenbanksysteme oder Netzwerk-Applikationen, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems oder der Netzwerk-Applikation) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem oder der Netzwerk-Applikation in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht. Beispielsweise können zusätzlich zu einer Prüfsumme über die Transaktionen auch eine Prüfsumme über den "State", d.h. die Zustände der Smart-Contracts und/oder der Konten und/oder über die Rückgabewerte der Transaktionen (engl. Transaction Receipts) z. B. in die Transaktion und/oder den Datenblock eingefügt werden.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems oder der Netzwerk-Applikation" kann im Zusammenhang mit der Erfindung beispielsweise der Datenblock des verteilten Datenbanksystems oder der Netzwerk-Applikation verstanden werden, der insbesondere einem (bestimmten) Datenblock direkt vorhergeht. Alternativ können unter "vorhergehender Datenblöcke eines (bestimmten) Datenblockes des verteilten Datenbanksystems oder der Netzwerk-Applikation" insbesondere auch alle Datenblöcke des verteilten Datenbanksystems oder der Netzwerk-Applikation verstanden werden, die dem bestimmten Datenblock vorhergehen. Hierdurch kann beispielsweise die Verkettungsprüfsumme oder die Transaktionsprüfsumme insbesondere nur über den dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems der der Netzwerk-Applikation" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem oder der Netzwerk-Applikation (z. B. eine Blockkette) durchführen [1][4][5]. Solche Knoten können beispielsweise Transaktionen eines verteilten Datenbanksystems oder einer Netzwerk-Applikation bzw. deren Datenblöcke ausführen oder neue Datenblöcke mit neuen Transaktionen in das verteilte Datenbanksystem oder die Netzwerk-Applikation mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem oder der Netzwerk-Applikation, eine Knotenprüfsumme (z. B. eine digitale Signatur oder ein Zertifikat) in dem neuen Datenblock speichern. Beider Knotenprüfsumme kann es sich dabei beispielsweise um eine von einem entsprechenden Knoten signierte Prüfsumme z. B. eines Datenblocks oder einer Transaktion handeln. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems oder der Netzwerk-Applikation sind. Dabei können die Geräte beispielsweise Feldgeräte sein oder Geräte im Internet der Dinge sein, die insbesondere auch ein Knoten des verteilten Datenbanksystems oder der Netzwerk-Applikation sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise über Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Bloccketten-Orakels löscht). Das Sicherheitsmodul kann dabei beispielsweise kryptographische Schlüssel umfassen, die z. B. für die Signatur der Transaktion und/oder für die Berechnung der Prüfsummen (z. B. Transaktionsprüfsummen oder Knotenprüfsummen) notwendig sind. Ein Blockketten-Orakel kann beispielsweise eine Information der physikalischen Welt über einen Sensor erfassen und als Datensatz an eine Netzwerkapplikation übermitteln. Weiterhin kann ein Blockketten-Orakel einen Datensatz aus einer Datenbank auslesen und an eine Netzwerkapplikation übermitteln.

Unter einem "Rechner" oder einem "Gerät" kann im Zusammenhang mit der Erfindung beispielsweise ein Computer(system), ein Client, ein Smart-Phone, ein Server, die jeweils außerhalb der Blockkette angeordnet sind bzw. kein Teilnehmer des verteilten Datenbanksystems oder der Netzwerk-Applikation (z. B. der Blockkette) sind (also keine Operationen mit dem verteilten Datenbanksystem oder der Netzwerk-Applikation durchführen oder diese nur abfragen, ohne jedoch Transaktionen durchzuführen, Datenblöcke einzufügen oder Proof-of-Work-Nachweise zu berechnen), verstanden werden. Alternativ kann insbesondere auch unter einem Rechner ein Knoten des verteilten Datenbanksystems oder der Netzwerk-Applikation verstanden werden. Mit anderen Worten kann insbesondere unter einem Gerät ein Knoten des verteilten Datenbanksystems oder der Netzwerk-Applikation verstanden werden oder auch ein Gerät außerhalb der Blockkette bzw. des verteilten Datenbanksystems oder der Netzwerk-Applikation verstanden werden. Ein Gerät außerhalb des verteilten Datenbanksystems oder der Netzwerk-Applikation kann beispielsweise auf die Daten (z. B. Transaktionen oder Steuertransaktionen) des verteilten Datenbanksystems oder der Netzwerk-Applikation zugreifen und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems oder der Netzwerk-Applikation) durch einen Knoten realisiert, kann dies z. B. mittels eines Smart-Contracts erfolgen, der insbesondere in einer Transaktion des verteilten Datenbanksystems oder der Netzwerk-Applikation gespeichert ist. Ein Rechner oder ein Gerät kann beispielsweise auch ein Teil der Infrastruktur sein, die z. B. die Netzwerk-Applikation oder das verteilte Datenbanksystem ausführt, realisiert oder umfasst.

Unter "Steuerbefehle" oder "Steuertransaktionen" können im Zusammenhang mit der Erfindung beispielsweise ein Smart-Contract [4][5] oder ausführbarer Programmcode verstanden werden, der insbesondere durch die Netzwerkapplikation oder das verteilte Datenbanksystem oder durch entsprechende Geräte ausgeführt wird, wobei beispielsweise das verteilte Datenbanksystem bzw. dessen Knoten und Infrastruktur die entsprechenden Steuerbefehle abarbeitet bzw. umsetzt. Insbesondere ergeben mehrere Steuerbefehle oder Steuertransaktionen aus einem oder mehreren Datenblöcken eine Befehlsfolge. Mittels der Steuerbefehle werden insbesondere eine Fertigungsanlage mit den zugehörigen Fertigungsmaschinen (z. B. Geräte) gesteuert, die Geräte eines Automatisierungsnetzes gesteuert oder die Geräte eines Energieversorgungsnetzes gesteuert oder Geräte im Internet der Dinge gesteuert. Insbesondere sind in den Steuerbefehlen oder Steuertransaktionen (also auch in den Befehlsfolgen) die Fertigungsanweisungen oder Fertigungsschritte für ein Produkt und dessen Herstellung kodiert. Mit den Steuerbefehlen oder Steuertransaktionen werden beispielsweise Geräte gesteuert, indem beispielsweise ein Gerät die entsprechenden Steuerbefehle ausführt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage und/oder Geräte im Internet der Dinge, die insbesondere auch ein Knoten des verteilten Datenbanksystems sind. Dabei können die Geräte beispielsweise Feldgeräte sein, die insbesondere auch ein Knoten des verteilten Datenbanksystems sind. Die Geräte können beispielsweise auch Bankautomaten sein, wobei die Steuerbefehle eine Geldauszahlung veranlassen. Beispielsweise können die Steuerbefehle aus einer Befehlsfolge abgeleitet werden bzw. aus diesen bestimmt werden. Beispielsweise kann eine Steuertransaktion einen oder mehrere Steuerbefehle umfassen. Beispielsweise kodieren die Steuerbefehle mechanische Bewegung und/oder andere physikalische Größen (z. B. Druck oder Temperatur), die von einem entsprechenden Gerät/Knoten (z. B. durch einen entsprechenden Aktor) in die entsprechende mechanische Bewegung und/oder die entsprechende andere physikalische Größen umgesetzt werden. Mit den Steuerbefehlen werden dann beispielsweise Aktoren der Geräte und/oder Knoten gesteuert. Entsprechend umfasst ein entsprechendes Gerät/Knoten beispielsweise einen Aktor. Ist ein Gerät/Knoten beispielsweise ein Roboter so würde ein Aktor auch als Effektor bezeichnet werden. Bei einem Gerät kann es sich beispielsweise auch um ein mechatronisches Gerät oder System handeln, wobei ein mechatronisches Gerät/System beispielsweise ein Aktor und/oder ein lineartechnisches Gerät ist. Ein lineartechnisches Gerät ist beispielsweise ein Gerät zur Ausführung translativer Bewegungen. Bei einem entsprechenden Gerät kann es sich beispielsweise auch um ein Antriebssystem handeln. Mittels der Steuerbefehle und der Geräte und/oder Knoten kann beispielsweise auch ein Regelkreis geregelt und/oder gesteuert werden, indem beispielsweise die Ausführungsbestätigungsnachrichten für ausgeführte Steuerbefehle durch die Vorrichtung oder durch die Netzwerkapplikation ausgewertet werden und entsprechende Steuerbefehle als Reaktion auf die Ausführungsbestätigungsnachrichten erzeugt werden. Für diese neuen Steuerbefehle werden dann beispielsweise wieder entsprechende Ausführungsanforderungen bestimmt oder abgerufen und diese werden dann beispielsweise wieder Steuertransaktionen zugeordnet, damit diese beispielsweise - wie in der Erfindung beschrieben - von den entsprechenden Geräten für die Ausführung der Steuerbefehle berücksichtigt werden. Bei den Steuerbefehlen kann es sich beispielsweise auch um Steuerbefehle zum Steuern von kryptographischen Geräten und/oder Verfahren handeln (z. B. eine Nutzerauthentisierung oder Nutzerauthentifizierung).

Unter Steuerbefehlen können beispielsweise auch Befehlsfolgen oder auch Transaktionen aus einer Datenbank bzw. eines Datenbanksystems verstanden werden, die durch Geräte oder Knoten des verteilten Datenbanksystems ausgeführt werden sollen. Bei dem Datenbanksystem kann es sich beispielsweise um das verteilte Datenbanksystem handeln, wenn es z. B. Transaktionen gibt, denen noch keine Ausführungsanforderungen zugewiesen bzw. zugeordnet wurden. Alternativ oder zusätzlich kann das Datenbanksystem eine andere Datenbank sein, z. B. eine konventionelle hierarchische Datenbank, von der die entsprechenden Transaktionen abgerufen werden können. Unter Steuerbefehle können beispielsweise auch Befehlsfolgen oder auch Transaktionen verstanden werden, die durch ein Eingabesystem bereitgestellt werden und die von dem verteilten Datenbanksystem oder der Netzwerkapplikation ausgeführt werden sollen. Unter Steuerbefehlen können beispielsweise Befehlsfolgen oder Steuerbefehle verstanden werden mit denen mechanische und/oder elektrische und/oder elektromechanische und/oder elektronische Geräte gesteuert werden.

Unter "Sendergruppe" können im Zusammenhang mit der Erfindung beispielsweise ein Sender oder mehrere Sender verstanden werden, denen ein Identifizierer oder mehrere Identifizierer zugeordnet sind. Bei den Identifizierern handelt es sich vorzugsweise um einen eindeutigen Identifizierer. Beispielsweise kann mit einer Sendergruppe auch ein einzelner Sender gemeint sein, dem ein entsprechender Identifizierer zugeordnet wird. Die Sendergruppe kann beispielsweise auch eine Sicherheitsdomäne sein, wobei der Sicherheitsdomäne und/oder deren Sendern beispielsweise eine Policy zugeordnet ist, die vorzugsweise angibt welche Arten von Daten (z. B. Sensordaten, Daten über Assets) und/oder Transaktionen (z. B. Steuertransaktionen oder Transaktionen, die Sensordaten umfassen) diese senden darf.

Bei weiteren Ausführungsformen der Prüfvorrichtung umfasst die unvalidierte Transaktion den Identifikationsdatensatz. Der Identifikationsdatensatz umfasst hierzu beispielsweise einen eindeutigen Identifizierer. Der eindeutige Identifizierer kann beispielsweise senderspezifisch und/oder sendergruppenspezifisch sein. In diesem Fall ist der senderspezifische und/oder der sendergruppenspezifische eindeutige Identifizierer einer oder der entsprechenden Sendergruppe zugeordnet. Hierzu kann beispielsweise die Prüfvorrichtung oder die Netzwerkapplikation eine Tabelle (z. B. ein Look-Up-Table) umfassen, die die entsprechenden senderspezifischen eindeutigen Identifizierer einer oder mehreren entsprechenden Sendergruppen zuordnet. Beispielsweise überprüft das Prüfmodul den Sicherheitszustand des Senders und/oder der Sendergruppe der unvalidierten Transaktion und speichert das Ergebnis des Prüfens im Prüfergebnis. Der Sicherheitszustand einer Sendergruppe kann beispielsweise durch das Sicherheitsniveau der/des Sender/s der Gruppe festgelegt werden. Verwendet der Sender beispielsweise kurze Passwörter oder eine veraltete (unsichere) Software (Patch-Status veraltet), so kann der Sendergruppe z. B. ein niedriges Sicherheitsniveau zugeordnet werden. Weiterhin kann beispielsweise zum Ermitteln des Sicherheitsniveaus des Senders überprüft werden, wann ein vom Sender verwendetes Passwort oder kryptographischer Schlüssel zuletzt aktualisiert wurde, ob ein Viren-Scanner aktiv und aktuell ist, ob ein Secure-Boot aktiviert ist, ob ein Dateisystem verschlüsselt ist, oder wie Berechtigungen in einem Dateisystem des Senders gesetzt sind.

Beispielsweise kann überprüft werden, ob dem Sender eine Sendergruppe zugeordnet ist, die der im Identifikationsdatensatz enthaltenen Sendergruppe entspricht. Beispielsweise wird überprüft, ob die dem Sender zugeordnete Sendergruppe identisch mit der Sendergruppe des Identifikationsdatensatzes ist. Alternativ kann beispielsweise überprüft werden, ob die dem Sender zugeordnete Sendergruppe und die Sendergruppe des Identifikationsdatensatzes gemäß einer Zuordnungsrelation von Sendergruppen (z. B. Sicherheitsdomänen) zulässig ist. Auch hierzu kann die Prüfvorrichtung eine entsprechende Tabelle und/oder Datenbank umfassen, die die entsprechenden Informationen umfasst.

Mit anderen Worten umfasst vorzugsweise ein Identifikationsdatensatz den Identifizierer der Sendergruppe und/oder den Sicherheitszustand der Sendergruppe. Beispielsweise kann auch der aktuelle Sicherheitszustand der Sendergruppe von einer Vorrichtung (z. B. einer Gruppenprüfvorrichtung) anhand von Senderdaten (z. B. Patchstatus) ermittelt werden.

Bei weiteren Ausführungsformen der Prüfvorrichtung wird der Identifikationsdatensatz durch die Prüfvorrichtung anhand einer Senderinformation und/oder anhand der Daten der unvalidierten Transaktion ermittelt. Beispielsweise wird anhand eines Senderidentifizierers (z. B. eine Netzwerkadresse des Senders, eine MAC-Adresse des Senders) der Senderinformation der Identifikationsdatensatz ermittelt. Hierzu kann beispielsweise die Netzwerknachricht ausgewertet werden, mit der die unvalidierte Transaktion an die Prüfvorrichtung geschickt wurde. Alternativ oder zusätzlich kann die unvalidierte Transaktion beispielsweise eine Prüfsumme (z. B. eine digitale Signatur oder ein digitales Zertifikat) umfassen, das beispielsweise ebenfalls die Senderinformation sein kann.

Der Sicherheitszustand kann beispielsweise ein ermittelter Sicherheitszustand der Sendergruppe sein oder ein Sicherheitszustand der entsprechenden Sendergruppe kann beispielsweise durch die Prüfvorrichtung und/oder die Netzwerkapplikation gespeichert oder vorgegeben sein.

Bei weiteren Ausführungsformen der Prüfvorrichtung umfasst die unvalidierte Transaktion und/oder die validierte Transaktion Steuerbefehle zum Steuern eines oder mehrerer Geräte (z. B. einen Fertigungsroboter). Beispielsweise kann das Gerät ebenfalls mittels der Netzwerkapplikation kommunikativ angebunden sein. Beispielsweise kann das Gerät einer weiteren Sendergruppe (z. B. eine zweiten oder/oder einer dritten Sendergruppe) zugeordnet sein. Die Zuordnung erfolgt vorzugsweise mittels eines dritten Identifikationsdatensatzes. Beispielsweise verarbeitet das Gerät nur validierte Transaktionen, deren Sendergruppe mit der eigenen Sendergruppe kompatibel ist. Kompatibel bedeutet dabei beispielsweise, dass den Sendergruppen ein Sicherheitsniveau (z. B. niedrig, mittel, hoch) zugeordnet ist. Um beispielsweise kompatibel zu sein, haben die validierten und/oder unvalidierten Transaktionen bestimmte Sicherheitsanforderungen zu erfüllen. Beispielsweise ist gefordert, dass die validierten und/oder unvalidierten Transaktionen mindestens ein mittleres Sicherheitsniveau aufweisen. Das Sicherheitsniveau selbst kann beispielsweise durch die verwendeten kryptographischen Verfahren und/oder die verwendeten Schlüssellängen und/oder die verwenden Passwortlängen bestimmt werden. Beispielsweise sind Passwortlängen von weniger als 5 Zeichen mit einem niedrigen Sicherheitsniveau aussoziiert, Passwortlängen von 5 bis 10 Zeichen mit einem mittleren Sicherheitsniveau und Passwortlängen von 11 bis 20 Zeichen mit einem hohen Sicherheitsniveau. Auch kann gefordert sein, dass für eine Validierung von unvalidierten Transaktionen und/oder ein Verarbeiten von validierten Transaktionen durch ein Gerät, die entsprechenden Transaktionen zumindest das Sicherheitsniveau des Gerätes, des Moduls oder der Prüfvorrichtung aufweisen müssen.

Bei weiteren Ausführungsformen der Prüfvorrichtung ist der Prüfvorrichtung und/oder der Netzwerkapplikation jeweils ein zweiter Identifikationsdatensatz einer jeweiligen Sendergruppe (z. B. einer zweiten Sendergruppe) zugeordnet, wobei insbesondere die Prüfvorrichtung und/oder das Prüfmodul nur unvalidierte Transaktionen prüft, deren Sendergruppe mit der Sendergruppe der Prüfvorrichtung und/oder der Netzwerkapplikation kompatibel ist, und/oder insbesondere die Prüfvorrichtung und/oder das Validierungsmodul nur unvalidierte Transaktionen validiert, deren Sendergruppe mit der Sendergruppe der Prüfvorrichtung und/oder der Netzwerkapplikation kompatibel ist.

Kompatibel bedeutet dabei beispielsweise, dass den Sendergruppen ein Sicherheitsniveau (z. B. niedrig, mittel, hoch) zugeordnet ist. Um beispielsweise kompatibel zu sein, haben die validierten und/oder unvalidierten Transaktionen bestimmte Sicherheitsanforderungen zu erfüllen. Beispielsweise ist gefordert, dass die validierten und/oder unvalidierten Transaktionen mindestens ein mittleres Sicherheitsniveau aufweisen. Das Sicherheitsniveau selbst kann beispielsweise durch die verwendeten kryptographischen Verfahren und/oder die verwendeten Schlüssellängen und/oder die verwendeten Passwortlängen bestimmt werden. Beispielsweise sind Passwortlängen von weniger als 5 Zeichen mit einem niedrigen Sicherheitsniveau aussoziiert, Passwortlängen von 5 bis 10 Zeichen mit einem mittleren Sicherheitsniveau und Passwortlängen von 11 bis 20 Zeichen mit einem hohen Sicherheitsniveau. Auch kann gefordert sein, dass für eine Validierung von unvalidierten Transaktionen und/oder ein Verarbeiten von validierten Transaktionen durch ein Gerät, die entsprechenden Transaktionen zumindest das Sicherheitsniveau des Gerätes, des Moduls oder der Prüfvorrichtung aufweisen müssen.

Bei weiteren Ausführungsformen der Prüfvorrichtung umfasst die Netzwerkapplikation die Prüfvorrichtung.

Bei weiteren Ausführungsformen der Prüfvorrichtung entscheidet das Validierungsmodul anhand des Prüfergebnisses, ob die unvalidierte Transaktion als die validierte Transaktion gespeichert wird.

Ergibt sich beispielsweise, dass die Sendergruppe der unvalidierten Transaktion als unsicher eingestuft wurde, wird dies z. B. im Prüfergebnis gespeichert. In einem solchen Fall kann das Validierungsmodul das Speichern der unvalidierten Transaktion als validierte Transaktion unterbinden. Bestätigt beispielsweise das Prüfergebnis die Integrität oder das Sicherheitsniveau des Senders und/oder der unvalidierten Transaktion, speichert das Validierungsmodul die unvalidierte Transaktion als validierte Transaktion.

Gemäß einem weiteren Aspekt betrifft die Erfindung eine Vorrichtung zum Übertragen eines Sicherheitszustand für einen oder mehrere Sender, die mit einer Netzwerkapplikation kommunizieren, aufweisend:
- eine Kommunikationsschnittstelle;
- ein Überwachungsmodul, wobei
   - das Überwachungsmodul dazu eingerichtet ist, einen Sicherheitszustand für einen oder mehrere Sender oder für eine Sendergruppe zu ermitteln, wobei
      - der eine oder die mehreren Sender jeweils eine unvalidierte Transaktion an eine Prüfvorrichtung und/oder eine Netzwerkapplikation übermitteln,
      - mittels der Kommunikationsschnittstelle der Sicherheitszustand an die Prüfvorrichtung und/oder an die Netzwerkapplikation übermittelt wird.

Bei weiteren Ausführungsformen der Vorrichtung ist die Kommunikationsschnittstelle dazu eingerichtet, eine unvalidierte Transaktion an die Prüfvorrichtung und/oder an die Netzwerkapplikation zu senden, wobei insbesondere die Netzwerkapplikation die Prüfvorrichtung umfasst. Insbesondere schützt die Vorrichtung die unvalidierte Transaktion durch eine Prüfsumme, wobei insbesondere die Vorrichtung die Prüfsumme vorrichtungsspezifisch bildet. Beispielsweise ist die Vorrichtung einer der Sender.

Beispielsweise kann der Sicherheitszustand insbesondere ein festes dem Sender zugeordnetes Sicherheitslabel (z. B. eine Sicherheitsdomäne) oder ein aktuell dem Sender zugeordnetes Sicherheitslabel sein (d.h. das aktuelle Label kann dynamisch sein), das z. B. im Identifikationsdatensatz gespeichert ist. Der Sicherheitszustand eines Senders kann dann z. B. administrativ oder automatisch aktualisiert werden. Mit anderen Worten umfasst vorzugsweise ein Identifikationsdatensatz einen Identifizierer des Senders und/oder den Sicherheitszustand.

Bei weiteren Ausführungsformen der Vorrichtung ist der Sicherheitszustand kryptographisch geschützt, wobei insbesondere der kryptographische Schutz mittels einer Prüfsumme realisiert ist.

Bei weiteren Ausführungsformen der Prüfvorrichtung und/oder der Vorrichtung ist die Netzwerkapplikation ein verteiltes Datenbanksystem, insbesondere eine Blockkette. Der Sender ist beispielsweise ein Knoten, wobei insbesondere ein Knoten, der ein Sender ist, eine Blockketten-Wallet oder ein Blockketten-Orakel ist. Alternativ oder zusätzlich ist beispielsweise die Vorrichtung der Sender. Alternativ oder zusätzlich ist insbesondere die Prüfvorrichtung ein Knoten der Netzwerkapplikation, wobei insbesondere ein Knoten, der eine Prüfvorrichtung ist, ein Mining-Knoten ist.

Gemäß einem weiteren Aspekt betrifft die Erfindung ein computerimplementiertes Verfahren zum Prüfen einer an eine Netzwerkapplikation gesendete unvalidierte Transaktion mit dem Verfahrensschritten:
- Empfangen einer unvalidierten Transaktion von einem Sender, wobei
   ∘ der unvalidierten Transaktion mittels eines ersten Identifikationsdatensatzes einer Sendergruppe und/oder dem Sender zugeordnet ist;
- Ermitteln eines Prüfergebnisses für die unvalidierte Transaktion anhand des ersten Identifikationsdatensatzes und eines Sicherheitszustandes der Sendergruppe und/oder des Senders;
- Speichern der unvalidierten Transaktion anhand des Prüfergebnisses als validierte Transaktion in einer Netzwerkapplikation.

Bei weiteren Ausführungsformen des Verfahrens umfasst das Verfahren weitere Verfahrensschritte oder Merkmale der Prüfvorrichtung, um z. B. die funktionalen Merkmale der Prüfvorrichtung oder der Ausführungsformen der Prüfvorrichtung als Verfahren zu realisieren.

Gemäß einem weiteren Aspekt betrifft die Erfindung ein computerimplementiertes Verfahren zum Übertragen eines Sicherheitszustand für einen oder mehrere Sender, die mit einer Netzwerkapplikation kommunizieren, mit folgenden Verfahrensschritten:
- Ermitteln eines Sicherheitszustands für einen oder mehrere Sender, wobei
   - der eine oder die mehreren Sender jeweils eine unvalidierte Transaktion an eine Prüfvorrichtung und/oder eine Netzwerkapplikation übermitteln,
- Übermitteln des Sicherheitszustands an die Prüfvorrichtung und/oder an die Netzwerkapplikation.

Bei weiteren Ausführungsformen des Verfahrens umfasst das Verfahren weitere Verfahrensschritte oder Merkmale der Vorrichtung, um z. B. die funktionalen Merkmale der Vorrichtung oder der Ausführungsformen der Vorrichtung als Verfahren zu realisieren.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die erfindungsgemäße Prüfvorrichtung und/oder die Vorrichtung erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die erfindungsgemäße Prüfvorrichtung und/oder die Vorrichtung erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung.
- Fig. 3: ein weiteres Ausführungsbeispiel der Erfindung.

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware (komponenten) oder ausschließlich per Software (komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen. Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne, dass dies expliziert in dem jeweiligen Ausführungsbeispiel genannt sein muss.

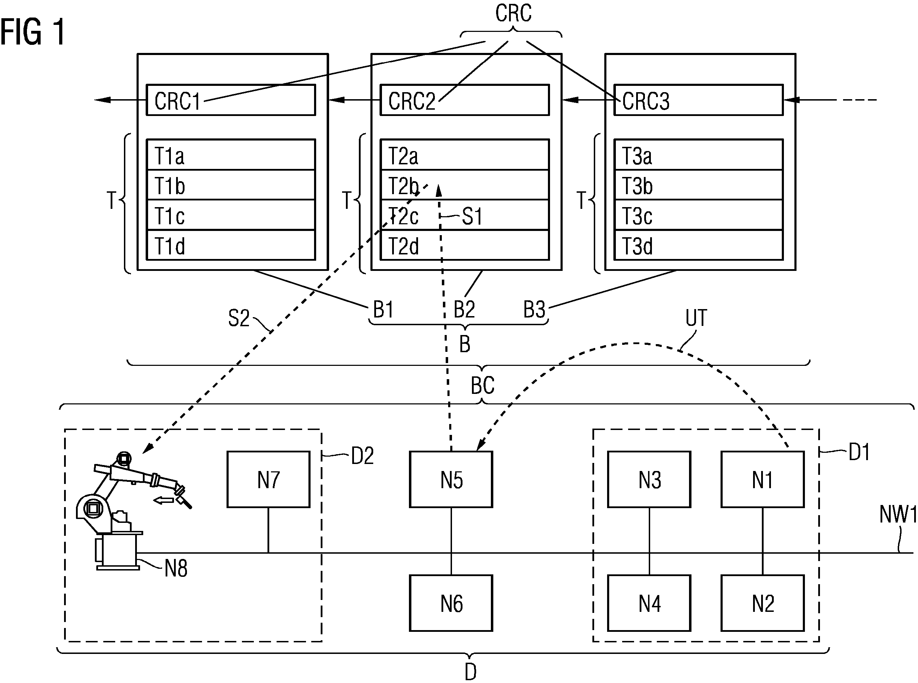

Fig. 1 zeigt ein cyberphysikalisches System, das eine Netzwerk-Applikation und deren Infrastruktur umfasst.

Das in Fig. 1 gezeigte System kann beispielsweise eine Netzwerk-Applikation in Form einer Blockkette BC oder ein verteiltes Datenbanksystem umfassen, wobei das verteilte Datenbanksystem z. B. mittels einer Blockkette BC realisiert ist.

In Fig. 1 sind ein erster Knoten N1 (z. B. ein Mining Knoten einer Blockkette), ein zweiter Knoten N2 (z. B. ein Blockketten-Orakel mit z. B. einem Sensor), ein dritter Knoten N3 (z. B. eine Blockketten Wallet) und ein vierter Knoten N4 (z. B. eine weitere Blockketten Wallet) einer ersten Sendergruppe D1 gezeigt. Zusätzlich sind ein fünfter Knoten N5 und ein sechster Knoten N6 gezeigt. Der fünfte Knoten N5 und/oder der sechste Knoten N6 können beispielsweise eine Prüfvorrichtung implementieren, wobei die Infrastruktur Netzwerkapplikation die Prüfvorrichtung beispielsweise umfassen kann. Weiter sind noch ein siebter Knoten N7 und ein achter Knoten N8 (z. B. ein Fertigungsroboter) einer zweiten Sendergruppe D2 gezeigt, wobei der siebte Knoten N7 beispielsweise ein Blockkettenorakel mit einem Sensor zur Überwachung des achten Knotens N8 ist. Hierbei wird beispielsweise die Ausführung von Steuerbefehlen oder Steuertransaktionen durch den achten Knoten N8 überwacht. Entsprechend werden in Fig. 1 mehrere Sendergruppen D gezeigt. Das sind z. B. die erste Sendergruppe D1 und die zweite Sendergruppe D2.

Die Knoten N1 - N8 bilden beispielhaft einen Teil der Infrastruktur der Netzwerkapplikation, die z. B ein verteiltes Datenbanksystem (z. B. die Blockkette BC) ist.

Die Knoten sind dabei z. B. über ein erstes Kommunikationsnetzwerk NW1 (z. B. ein WAN, LAN oder das Internet) miteinander verbunden. Das verteilte Datenbanksystem kann zudem noch eine Vielzahl weiterer Knoten umfassen. Mit anderen Worten sind eine Vielzahl von Geräten (die Knoten N1 - N8) in Fig. 1 gezeigt, die mittels der Netzwerkapplikation in Form eines verteilten Datenbanksystems kommunikativ verbunden sind.

Die Prüfvorrichtung umfasst eine Kommunikationsschnittstelle, ein Prüfmodul und ein Validierungsmodul, die beispielsweise über einen Bus kommunikativ verbunden sind.

Die Kommunikationsschnittstelle ist dazu eingerichtet, eine unvalidierte Transaktion von einem Sender zu empfangen, wobei der unvalidierten Transaktion mittels eines ersten Identifikationsdatensatzes einer Sendergruppe D (z. B. der ersten Sendergruppe D1) zugeordnet ist. Der Sender kann dabei beispielsweise einer der Knoten (Knoten N1 - N4) der ersten Sendergruppe D1 sein.

Die Kommunikationsschnittstelle kann beispielsweise als Netzwerkschnittstelle oder als andere Schnittstelle (z. B. eine PCI- oder USB-Schnittstelle) ausgebildet sein, damit z. B. die Prüfvorrichtung einfach im fünften Knoten N5 installiert werden kann oder mit dem fünften Knoten N5 verbunden werden kann.

Das Prüfmodul ist dazu eingerichtet, ein Prüfergebnis für die unvalidierte Transaktion anhand des ersten Identifikationsdatensatzes und eines (aktuellen) Sicherheitszustandes der Sendergruppe zu ermitteln.

Das Validierungsmodul ist dazu eingerichtet, die unvalidierte Transaktion anhand des Prüfergebnisses als validierte Transaktion in einer Netzwerkapplikation zu speichern.

Zusätzlich kann das gezeigte System eine Vorrichtung zum Übertragen eines Sicherheitszustands für einen oder mehrere Sender, die mit der Netzwerkapplikation und/oder Prüfvorrichtung kommunizieren, umfassen.

Die Vorrichtung umfasst z. B. eine Kommunikationsschnittstelle und ein Überwachungsmodul, die über einen Bus kommunikativ verbunden sind.

Das Überwachungsmodul ist dazu eingerichtet, einen Sicherheitszustand für einen oder mehrere Sender oder für eine Sendergruppe oder für mehrere Sendergruppen zu ermitteln, wobei der eine oder die mehreren Sender jeweils eine unvalidierte Transaktion an die Prüfvorrichtung und/oder die Netzwerkapplikation übermitteln. Mittels der Kommunikationsschnittstelle wird der Sicherheitszustand an die Prüfvorrichtung und/oder an die Netzwerkapplikation übermittelt.

In einer Variante ist die Vorrichtung der Sender, der die unvalidierte Transaktion sendet. Hierzu ist die Kommunikationsschnittstelle dazu eingerichtet, die unvalidierte Transaktion an die Prüfvorrichtung und/oder an die Netzwerkapplikation zu senden.

In einer weiteren Variante ermittelt die Vorrichtung den Sicherheitszustand für einen oder mehrere Sender einer Sendergruppe. Anhand der Sicherheitszustände ermittelt die Vorrichtung einen Sicherheitszustand der Sendergruppe. Beispielsweise wird überprüft, welche Passwortlängen oder Schlüssellängen für die Nutzung eines jeweiligen Senders erforderlich ist. Anhand dieser Information kann dann z. B. der Sendergruppe ein Sicherheitsniveau zugeordnet werden, das in dem Sicherheitszustand gespeichert wird.

Des Weiteren zeigt die Fig. 1 Blöcke B, beispielsweise einen ersten Block B1, einen zweiten Block B2 und einen dritten Block B3, der Blockkette BC, wobei hier insbesondere ein Ausschnitt der Blockkette BC exemplarisch gezeigt ist.

Die Blöcke B umfassen jeweils mehrere Transaktionen T. Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten VorgängerBlock gebildet wird. Somit umfasst der erste Block B1 eine erste Verkettungsprüfsumme CRC1 von seinem Vorgängerblock, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen HashFunktion wie z.B. SHA-256, KECCAK-256, BLAKE2 oder SHA-3 gebildet werden. Beispielsweise kann die Verkettungsprüfsumme zusätzlich über die Datenblockprüfsumme berechnet werden oder der Header umfasst die Datenblockprüfsumme (die Datenblockprüfsumme ist im Nachgang erläutert).

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash- Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen, so wie es in den Ausführungsformen der Erfindung erläutert wurde. Ebenso ist es möglich, dass ein Block einen Proof-of-Possession-Nachweis oder einen anderen Berechtigungsnachweis aufweist. Die Blockkette BC selbst wird durch eine Blockketten-Infrastruktur mit den mehreren Blockketten-Knoten (z. B. Knoten N1 - N8 und weiteren Knoten) realisiert. Bei den Knoten kann es sich beispielsweise um Blockkettenorakel oder vertrauenswürdige Knoten handeln.

Die Erfindung ist z. B. für Knoten einer Netzwerkapplikation wie z. B. Blockketten-Orakel oder Blockketten-Wallets geeignet.

Beispielsweise kann der erste Knoten N1 die unvalidierte Transaktion UT erzeugen. Diese wird der Prüfvorrichtung (z. B. der fünfte Knoten N5) übermittelt. Wenn das Prüfergebnis bestätigt, dass die Sendergruppe des ersten Knotens N1 als kompatibel erachtet wird, wird die unvalidierte Transaktion als validierte Transaktion (z. B. die Transaktion T2b) im verteilten Datenbanksystem bzw. der Netzwerkapplikation gespeichert (S1).

Mittels der Infrastruktur des verteilten Datenbanksystems wird beispielsweise die validierte Transaktion T2b an den achten Knoten N8 übertragen, der diese dann verarbeitet (S2). Umfasst die validierte Transaktion z. B. Steuerbefehle zur Steuerung eines Fertigungsroboters, so wird der Roboter hierdurch gesteuert. Alternativ kann der achte Knoten N8 innerhalb eines vorgegebenen Zeitintervalls überprüfen, ob eine validierte Transaktion vorliegt, die durch den Knoten N8 ausgeführt werden kann.

Die unvalidierte Transaktion UT kann beispielsweise Daten oder Steuertransaktionen umfassen.

Die Daten können dabei Sensordaten sein, wobei insbesondere die Kommunikationsvorrichtung einen Sensor zum Erfassen der Sensordaten umfasst. Die Sensordaten können beispielsweise von einem oder über ein Gerät (z. B. dem dritten Knoten N3 oder den achten Knoten N8) erfasst werden.

Mit der Erfindung kann beispielsweise ein Multi-Level-Security-Modell in einer Netzwerkapplikation wie einem verteilten Datenbanksystem (z. B. eine Blockketten-Infrastruktur) realisiert werden, um z. B. unterschiedliche kritische Applikationen bzw. Nutzungen einer Blockketten-Infrastruktur zu gewährleisten. Damit kann beispielsweise erreicht werden, dass eine gemeinsame Blockketten-Infrastruktur durch mehrere Applikationen durch entsprechender Sendergruppen (Security-Domains) gemeinsam genutzt werden kann.

Dabei ist z. B. sichergestellt, dass mehrere Applikationen, die den unterschiedlichen Sendergruppen D zugeordnet sind, voneinander verlässlich isoliert sind. Beispielsweise sollen Transaktionen der ersten Sendergruppe D1 nur von (Teilnehmer)knoten (Wallets, Orakel) eingestellt werden können, die dieser ersten Sendergruppe D1 zugeordnet sind. Dagegen können andere Teilnehmerknoten (Knoten N7 und N8), die der zweiten Sendergruppe D2 zugeordnet sind, Transaktionen einstellen, die der zweiten Sendergruppe D2 zugeordnet sind. Selbst wenn z. B. ein Teilnehmerknoten (z. B. Knoten N7 oder Knoten N8) der zweiten Sendergruppe D2 gehackt (manipuliert) wird, so werden durch die Blockchain-Infrastruktur lediglich Transaktionen bestätigt, die der zweiten Sendergruppe D2 zugeordnet sind. Der Angreifer kann zwar prinzipiell Transaktionen bilden und der Blockchain-Infrastruktur bereitstellen, die der ersten Sendergruppe D1 zugeordnet sind. Diese werden jedoch durch die Blockchain-Infrastruktur nicht bestätigt, da der (manipulierte) Teilnehmerknoten nicht der ersten Sendergruppe D1 (z. B. eine Security-Domäne) zugeordnet ist. Eine Sendergruppe D ist dabei z. B. durch einen entsprechenden Identifikationsdatensatz, das z. B. ein Security-Label umfasst, gekennzeichnet. Dies kann beispielsweise eine Bitfolge, Bytefolge, Zeichenkette, wie z. B. "LOW", MEDIUM", HIGH"; "PUBLIC", "CONFIDENTIAL", "SECRET" oder "GENERIC", "PAYMENT", "CONTRACT_AGREEMENT", oder "CONTROL", "SAFETY", "MONITORING") sein. Mit dem Security-Label kann beispielsweise das Sicherheitsniveau einer Sendergruppe D gekennzeichnet werden. Auch der Sicherheitszustand kann ein entsprechendes aktuelles Security-Label umfassen, um die Kompatibilität der Sendergruppe des Senders für das Prüfen und das Validieren zu ermitteln.

Das Security-Label kann in Varianten auch als Integrity-Label für eine Integritätsprüfung verwendet werden.

Dazu prüft die Blockketten-Infrastruktur in einer weiteren Variante mittels der Prüfvorrichtung eine Zuordnung des Senders (z. B. der Konten N1) zu einer Sendergruppe (z. B. eine Security Domain):
- Ein Knoten (z. B. Blockketten-Wallet, Blockketten-Orakel) wird einer oder mehreren Sendergruppen zugeordnet.
- Eine von einem Knoten (z. B. ein Teilnehmerknoten) gebildete unvalidierte Transaktion wird nur akzeptiert (z. B. als validierte Transaktion gespeichert), wenn der erste Identifikationsdatensatz einen Identifizierer umfasst oder referenziert, die dem jeweiligen Sender über den Sicherheitszustand zugeordnet ist. Akzeptieren einer Transaktion bedeutet beispielsweise, dass sie in einem Block der Blockketten bestätigt wird und/oder dass sie in den Pool unbestätigter, zu bestätigender Transaktionen aufgenommen wird. Dies wird beispielsweise von dem Validierungsmodul realisiert.

Dadurch kann ein Knoten nur eine Transaktion mit einem bestimmten Idenfizierer bilden, wenn er dieser Sendergruppe zugeordnet ist. Es wird also ein "multi-level Security"-Modell für eine Blockketten-Infrastruktur realisiert.

Diese Prüfungen erfolgen vorzugsweise nicht durch einen Smart Contract, sondern wenn eine (noch unbestätigte) Transaktion durch einen Sender (z. B. einer der Knoten N1 - N4) in den Pool unbestätigter Transaktionen (auch als unvalidierte Transaktionen bezeichnet) eingestellt wird.

In einer weiteren Variante kann ein Smart Contract der Bloccketten prüfen, ob eine zu bestätigende (unvalidierte) Transaktion lediglich (bestätigte oder validierte) Transaktionen referenziert, die der gleichen bzw. allgemein einer kompatiblen Sendergruppe zugeordnet sind. Ob zwei oder mehrere Sendergruppen kompatibel sind, kann durch eine Relation zwischen zulässigen Transaktionen beschrieben werden. Dies kann z. B. mittels einer Abbildung zwischen Sendergruppen von referenzierten, bestätigten Transaktionen (auch als validierte Transaktionen bezeichnet) und einer zu bestätigenden Transaktion (auch als unvalidierte Transaktion bezeichnet) implementiert werden.

Weiterhin kann einem Knoten der Blockchain-Infrastruktur (auch als Mining-Knoten bezeichnet) ebenfalls ein oder mehrere Sendergruppen zugeordnet sein. Es ist möglich, dass ein Blockketten-Knoten nur Transaktionen mit denjenigen Sendergruppen (also mit entsprechenden Identifikationsdatensätzen mit entsprechenden Identifizierern und/oder Security-Labeln) bestätigen kann, die ihm selbst zugeordnet sind. D. h., dass ein von einem Blockchain-Knoten gebildeter Block der Blockchain nur dann als gültig gilt, wenn er ausschließlich Transaktionen mit einem Identifikationsdatensatz bestätigt, für die dieser Knoten gemäß seines Sicherheitszustandes (z. B. des Security-Labels) autorisiert ist.

Beispielsweise kann ein entsprechender Identifikationsdatensatz einen Identifizierer und/oder einen Sicherheitszustand umfassen, der von dem Sender bereitgestellt wurde. Der Sicherheitszustand der Sendergruppe ist vorzugsweise ein Sicherheitszustand, der über den Sender von einem anderen Gerät (z. B. der Vorrichtung) ermittelt wurde.

Dadurch wird vorzugsweise verhindert, dass ein Knoten Transaktionen als gültig bestätigt (validiert), für die er nicht die erforderliche Berechtigung hat. Es wird also insbesondere eingeschränkt, dass ein bestimmter Knoten nur bestimmte Blockketten-Transaktionen bestätigen darf (entsprechend des Sicherheitszustandes des Senders (z. B. Security-Klassifikation des Blockketten-Knotens) und der Transaktionen (z. B. über den Identifikationsdatensatz der Transaktion).

Ein Identifizierer (z. B. Security-Label, Security-Domain-Identifier) kann dabei z. B. mehrere Teile umfassen, insbesondere einen Tenant-Teil und einen Klassifikationsteil. Dies ermöglicht, dass z. B. unterschiedliche Nutzergruppen (Tenants) einer Blockketten-Infrastruktur unabhängig voneinander Klassifikationen (z.B. "LOW"; "MEDIUM", "HIGH"; "PUBLIC", "CONFIDENTIAL", SECRET"; "CONTROL"; "SAFETY", "REALTIME", "OPERATIONMONITORING") nutzen können.

Weiterhin ist es z. B. möglich, einen Identifizierer (z. B. Security-Domain-Identifier) kryptographisch zu bestimmen, z. B. als Public Key oder als Hash-Wert eines Public Keys oder als UUID (universally unique identifier, siehe RFC4122).

Dies ist vorteilhaft, damit unterschiedliche Nutzergruppen nicht versehentlich den gleichen Identifizierer wählen. Weiterhin kann ein Knoten einer Sendergruppe dadurch zugeordnet werden, dass eine mit einem privaten kryptographischen Schlüssel digital signierte Sendergruppen-Zuordnungs-Transkation, die eine Identifizierungsinformation des entsprechenden Knotens umfasst, in die Blockkette eingestellt wird. Diese Zuordnungstransaktion ist mit demjenigen privaten kryptographischen Schlüssel digital signiert, der dem jeweiligen kryptographischen Identifizierer zugeordnet ist.

Die Prüfvorrichtung und/oder die Vorrichtung und/oder die Knoten und/oder die Infrastruktur der Netzwerkapplikation können beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Durch die Erfindung wird ein "Multi-level Security"-Security-Modell für eine Netzwerkapplikation (z. B. eine Blockchain-Infrastruktur) realisiert. Dies ermöglicht die Nutzung einer gemeinsamen Blockchain-Infrastruktur für Applikationen mit unterschiedlicher Kritikalität. Dabei ist mit hoher Verlässlichkeit gewährleistet, dass unterschiedlich kritische Applikationen voneinander isoliert sind. Dies ist z.B. vorteilhaft, wenn Safety-kritische oder Betriebs-kritische Steuerungs- oder Überwachungsfunktionen eines Cyber-physikalischen Systems unter Nutzung der Blockchain-Technologie (Distributed Ledger) realisiert sind.

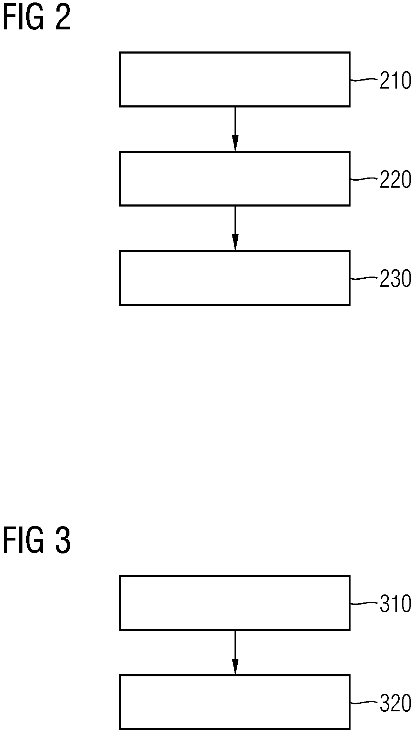

Die Fig. 2 zeigt ein weiteres Ausführungsbeispiel der Erfindung, das als Ablaufdiagramm für ein Verfahren dargestellt ist.

Das Verfahren ist vorzugsweise rechnergestützt realisiert.

Im Einzelnen wird in diesem Ausführungsbeispiel ein computerimplementiertes Verfahren zum Prüfen einer an eine Netzwerk-applikation gesendete unvalidierte Transaktion gezeigt.

Das Verfahren umfasst einen ersten Verfahrensschritt 210 Empfangen einer unvalidierten Transaktion von einem Sender, wobei der unvalidierten Transaktion mittels eines ersten Identifikationsdatensatzes einer Sendergruppe und/oder dem Sender zugeordnet ist.

Das Verfahren umfasst einen zweiten Verfahrensschritt 220 zum Ermitteln eines Prüfergebnisses für die unvalidierte Transaktion anhand des ersten Identifikationsdatensatzes und eines Sicherheitszustandes der Sendergruppe und/oder des Senders. Das Verfahren umfasst einen dritten Verfahrensschritt 230 zum Speichern der unvalidierten Transaktion anhand des Prüfergebnisses als validierte Transaktion in einer Netzwerkapplikation.

Die Fig. 3 zeigt ein weiteres Ausführungsbeispiel der Erfindung, das als Ablaufdiagramm für ein Verfahren dargestellt ist.

Das Verfahren ist vorzugsweise rechnergestützt realisiert.

Im Einzelnen wird in diesem Ausführungsbeispiel ein computerimplementiertes Verfahren zum Übertragen eines Sicherheitszustands für einen oder mehrere Sender, die mit einer Netzwerkapplikation kommunizieren gezeigt.

Das Verfahren umfasst einen ersten Verfahrensschritt 310 zum Ermitteln eines Sicherheitszustands für einen oder mehrere Sender, wobei der eine oder die mehreren Sender jeweils eine unvalidierte Transaktion an eine Prüfvorrichtung und/oder eine Netzwerkapplikation übermitteln.

Das Verfahren umfasst einen zweiten Verfahrensschritt 320 zum Übermitteln des Sicherheitszustands an die Prüfvorrichtung und/oder an die Netzwerkapplikation.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles https://blockchainhub.net/blockchain-oracles/ Stand 14.03.2018
[9] Joseph Poon, Thaddeus Dryja: The Bitcoin Lightning Network: Scalable Off-Chain Instant Payments. 14. Januar 2016, abgerufen am 30. Juni 2018 (PDF; 3 MB, englisch).

## Patentansprüche

1. Prüfvorrichtung für an eine Netzwerkapplikation gesendete unvalidierte Transaktion aufweisend:
- eine Kommunikationsschnittstelle, wobei
∘ die Kommunikationsschnittstelle dazu eingerichtet ist, eine unvalidierte Transaktion von einem Sender zu empfangen,
∘ der unvalidierten Transaktion mittels eines ersten Identifikationsdatensatzes einer Sendergruppe und/oder dem Sender zugeordnet ist;
- ein Prüfmodul, wobei
∘ das Prüfmodul dazu eingerichtet ist, ein Prüfergebnis für die unvalidierte Transaktion anhand des ersten Identifikationsdatensatzes und eines Sicherheitszustandes des Senders und/oder einer Sendergruppe zu ermitteln;
- ein Validierungsmodul, wobei
∘ das Validierungsmodul dazu eingerichtet ist, die unvalidierte Transaktion anhand des Prüfergebnisses als validierte Transaktion in einer Netzwerkapplikation zu speichern.

2. Prüfvorrichtung nach Anspruch 1, wobei
- die unvalidierte Transaktion den Identifikationsdatensatz umfasst.

3. Prüfvorrichtung nach einem der vorhergehenden Ansprüche, wobei
- der Identifikationsdatensatz durch die Prüfvorrichtung anhand einer Senderinformation und/oder anhand der Daten der unvalidierten Transaktion ermittelt wird.

4. Prüfvorrichtung nach einem der vorhergehenden Ansprüche, wobei
- die unvalidierte Transaktion und/oder die validierte Transaktion Steuerbefehle zum Steuern eines oder mehrerer Geräte umfasst.

5. Prüfvorrichtung nach einem der vorhergehenden Ansprüche, wobei
- der Prüfvorrichtung und/oder der Netzwerkapplikation jeweils ein zweiter Identifikationsdatensatz einer jeweiligen Sendergruppe zugeordnet ist,
- insbesondere die Prüfvorrichtung und/oder das Prüfmodul nur unvalidierte Transaktionen prüft, deren Sendergruppe mit der Sendergruppe der Prüfvorrichtung und/oder der Netzwerkapplikation kompatibel ist, und/oder
- insbesondere die Prüfvorrichtung und/oder das Validierungsmodul nur unvalidierte Transaktionen validiert, deren Sendergruppe mit der Sendergruppe der Prüfvorrichtung und/oder der Netzwerkapplikation kompatibel ist.

6. Prüfvorrichtung nach einem der vorhergehenden Ansprüche, wobei
- die Netzwerkapplikation die Prüfvorrichtung umfasst.

7. Prüfvorrichtung nach einem der vorhergehenden Ansprüche, wobei
- das Validierungsmodul anhand des Prüfergebnisses entscheidet, ob die unvalidierte Transaktion als die validierte Transaktion gespeichert wird.

8. Vorrichtung zum Übertragen eines Sicherheitszustands für einen oder mehrere Sender, die mit einer Netzwerkapplikation kommunizieren, aufweisend:
- eine Kommunikationsschnittstelle;
- ein Überwachungsmodul, wobei
- das Überwachungsmodul dazu eingerichtet ist, einen Sicherheitszustand für einen oder mehrere Sender oder für eine Sendergruppe zu ermitteln, wobei
- der eine oder die mehreren Sender jeweils eine unvalidierte Transaktion an eine Prüfvorrichtung und/oder eine Netzwerkapplikation übermitteln,
- mittels der Kommunikationsschnittstelle der Sicherheitszustand an die Prüfvorrichtung und/oder an die Netzwerkapplikation übermittelt wird.

9. Vorrichtung nach Anspruch 8, wobei
- die Kommunikationsschnittstelle dazu eingerichtet ist, eine unvalidierte Transaktion an die Prüfvorrichtung und/oder an die Netzwerkapplikation zu senden,
- insbesondere die Netzwerkapplikation die Prüfvorrichtung umfasst,
- insbesondere die Vorrichtung die unvalidierte Transaktion durch eine Prüfsumme schützt,
- insbesondere die Vorrichtung die Prüfsumme vorrichtungsspezifisch bildet,
- insbesondere die Vorrichtung einer der Sender ist.

10. Vorrichtung nach Anspruch 8 oder 9, wobei
- der Sicherheitszustand kryptographisch geschützt ist,
- insbesondere der kryptographische Schutz mittels einer [kryptographischen] Prüfsumme realisiert ist.

11. Vorrichtung oder Prüfvorrichtung nach einem der vorhergehenden Ansprüche, wobei
- die Netzwerkapplikation ein verteiltes Datenbanksystem, insbesondere eine Blockkette, ist,
- der Sender ein Knoten der Netzwerkapplikation ist,
- insbesondere ein Knoten, der ein Sender ist, eine Blockketten-Wallet oder ein Blockketten-Orakel ist,
- insbesondere die Vorrichtung der Sender ist,
- insbesondere die Prüfvorrichtung ein Knoten der Netzwerkapplikation ist,
- insbesondere ein Knoten, der eine Prüfvorrichtung ist, ein Mining-Knoten ist.

12. Computerimplementiertes Verfahren zum Prüfen einer an eine Netzwerkapplikation gesendete unvalidierte Transaktion mit dem Verfahrensschritten:
- Empfangen einer unvalidierten Transaktion von einem Sender, wobei
∘ der unvalidierten Transaktion mittels eines ersten Identifikationsdatensatzes einer Sendergruppe und/oder dem Sender zugeordnet ist;
- Ermitteln eines Prüfergebnisses für die unvalidierte Transaktion anhand des ersten Identifikationsdatensatzes und eines Sicherheitszustandes der Sendergruppe und/oder des Senders;
- Speichern der unvalidierten Transaktion anhand des Prüfergebnisses als validierte Transaktion in einer Netzwerkapplikation.

13. Computerimplementiertes Verfahren zum Übertragen eines Sicherheitszustands für einen oder mehrere Sender, die mit einer Netzwerkapplikation kommunizieren, mit folgenden Verfahrensschritten:
- Ermitteln eines Sicherheitszustands für einen oder mehrere Sender, wobei
- der eine oder die mehreren Sender jeweils eine unvalidierte Transaktion an eine Prüfvorrichtung und/oder eine Netzwerkapplikation übermitteln;
- Übermitteln des Sicherheitszustands an die Prüfvorrichtung und/oder an die Netzwerkapplikation.

14. Computerprogrammprodukt mit Programmbefehlen zur Durchführung des Verfahrens nach Anspruch 12 und/oder 13.

15. Bereitstellungsvorrichtung für das Computerprogrammprodukt nach Anspruch 14, wobei die Bereitstellungsvorrichtung das Computerprogrammprodukt speichert und/oder bereitstellt.
